# EUROPEAN PATENT SPECIFICATION

(11) **EP 1 012 507 B1**
(45) Date of publication and mention of the grant of the patent: **02.01.2004**
(21) Application number: 98903207.3
(22) Date of filing: 25.02.1998
(51) Int. Cl.: F24J 2/05

(54) **SOLAR COLLECTOR OF THREE WALLED VACUUM TUBE**
SONNENKOLLEKTOR MIT VAKUUMROHR MIT DREI WÄNDEN
CAPTEUR SOLAIRE CONSTITUE D'UN TUBE A VIDE AVEC TROIS PAROIS

(30) Priority: 27.02.1997 GR 97100076
(43) Date of publication of application: 28.06.2000
(73) Proprietor: Maglaras, Constantinos, 112 53 Athens (GR)
(72) Inventor: Maglaras, Constantinos, 112 53 Athens (GR)
(86) International application number: PCT/GR1998/000007
(87) International publication number: WO 1998/038463

(56) References cited:
- GB-A- 1 488 812
- US-A- 4 151 828
- US-A- 4 186 724
- US-A- 4 307 712
- US-A- 4 452 233
- US-A- 4 579 107
- US-A- 5 555 878

## Description

So far in the Greek and the foreign market flat solar collectors of conventional design are widespread. The flat collectors have small efficiency. Having a closer look at the efficiency of these systems it can be gathered that they collect solar energy only in the noon hours (solar noon), that is 3-5 hours around noon, when the solar rays fall almost vertically on the collectors. Yet simultaneously they have big convection losses and also in cases when they do not have special selective surface from black oxide of nickel or of chromium they have big losses due to radiation. Because of the small overall efficiency (11-25%) these collectors occupy large surfaces but again they do not perform well and are inappropriate for use of hot water with temperatures higher than 45° C. Mainly for central installations they are judged unprofitable and this discredits solar energy.

Since 1976 there are collectors of vacuum tubes with wings (selective surfaces) which are flat, certainly with insulation of the vacuum and have doubled the efficiency in comparison with flat collectors but at great cost and many problems particularly in holding the vacuum. Also the vacuum tubes of double wall construction from glass, which are placed in the focus of paraboloid reflectors, double their efficiency since they exploit now for 8 hours the daily sunshine. However such collectors were used in closed circuits because they were unable to resist the pressure of the city water network which is greater than 0.2 Mpa and because in an open circuit they were in danger to become defective from the salts of the water of the city water network
Vacuum tubes of a double wall construction from bronze or copper and glass and of open circuit can deal with the subjects of city network pressure and of salts. Additionally they have paraboloid reflector in upward sloped position (tilted). But for an economical collector element of this kind and in order to confront the problem of steam making such an element needs to have a reflector surface area 40 cm x 150 cm and must render per element approximately 1800 Kcal/day. Such element also needs an inner tube in the size of a diameter of 13 cm from bronze or copper welded with a seam of 1 mm thickness.
These vacuum tubes presented big problems with undetected seam pores during cold pressing in an economical and productive manner of proceeding, for an economical final product. So the void was filled with humidity or/and water and the percentage of defective products was above 50%. At the same time they had an efficiency not as high as the American vacuum tubes, due to the high factor of inertia, since they must heat a big mass of water, witch is 20 liters per tube, below the selective surface.
A solar collector of the vacuum tubular type is known from US-A-4186724. The drawback of this type of construction is its big thermal inertia.

The invention solves this problem by the following measures:
1. It uses the biggest seamless tube on the market (but not of special construction and thus of big cost) as the bronze tube of diameter 80 mm or the copper up to 90 mm, and more over the stainless steel of 1 mm thickness.
2. Adaptation of the shape of semicylindrical paraboloid reflector of composite parabolic curve, such as during 8 hours of daily sunshine, the focus falls on the black selective surface from black nickel or black chrome which covers the inner bronze or copper or stainless steel or even plain steel tube in case of a closed circuit operation. Although the tube diameter has decreased to 80 mm and the reflector surface remained at the size of 40 cm x 150 cm or (up to 180 cm) the mass of water in each tube is reduced to 8 liters.
3. Another substantial subject of this invention is that an additional inner tube (a third inner wall-shirt) made from stainless steel 316 (against the electrolysis) or a plastic tube of special resistance to high temperatures, of diameter 70 mm or even 60 mm, is installed so that the mass of water is separated as a ring of small thickness, 5 to 10 mm immediately below the selective surface. In this way the inertia factor is improved by 35% without increasing the collectors cost. Small diameters of bronze tube can get 1800 kcal/per day/per collector by only using 2 or 3 vacuum tubes of a double wall construction, in the focus of a corresponding number of paraboloid reflectors and increasing the costs and the risk of steam making due to the small quantity of water in each tube during interruption of electricity in a central solar energy installation.
4. With a tube of triple wall in the focus of a semicylindrical paraboloid reflector which may also be installed horizontally, with a light slope for the air venting and orientation to the South (axis of reflector parallel to the course of the sun, East-West and with a small orientation of the reflector to the South in order to have successful focusing also during the winter months when the sun is lowering towards the horizon. With the reflector horizontal in these collectors we avoid the optical pollution of the solar energy installations besides the small area which they occupy without harming the efficiency per unit or per m². And this also constitutes another subject of the invention.
5. Because of the open circuit we can exploit, and this constitute an other element of the invention, an electric water heater i.e. 80 liter in a house, with recirculation through a circulator and a differential thermostat and to heat the water of the water heater with solar energy by the help of 2 collectors.of vacuum tube, which are installed hidden discreetly on the roof or on the roof tiles.
6. Another subject of this invention is that for the houses we use the solution of solar and electrical system as reserve of the fast heater with automatic thermostatic mixing in order to store boiling water 90° C in a small parallel cylindrical tank "Tank-Boiler" or also a vertical tank close to solar collector and a little above of it (so that the water is heated with natural circulation) and thus to double the quantity of hot water with the automatic thermostatic mixing and to triple it finally during the domestic use.

The solar collector of this invention consists in a vacuum tube having three walls, in which the inner wall after the glass tube (3) is a metallic tube (1) in order to resist the water networks pressure. For the metal tube bronze is preferred to avoid the deposition of the salts of hot water, also not to cause vigorously the phenomenon of electrolysis and to have good conductivity.
Wherever there is no danger of electrolysis (there are no iron parts in the circuit or the boiler), then the tube can also be from copper. The alongside surface (2) is made as special black selective, either with dipping in special baths, or with cleaning and sticking on of special foil from black oxide of nickel or black oxide of chrome or black oxide of titanium in order to have a high factor of absorption of solar thermal radiation (a=95%-100%) and simultaneously a low factor of thermal radiation (reemission s=1 %- 8%, where 1% is valid for titanium). The outer tube (3) mostly from transparent glass (ordinary transparent or special), of sufficient thickness, for breaking resistance (in case of hail of 2.5 cm diameter falling with speed of 96.5 km/hour), or more from special transparent, clear acrylic which should not turn yellow by the time, or other appropriate transparent plastic material (3). These two concentric tubes (1, 3) from different materials and of different dilatation factors, at temperature changes, are sealed at the edges of the transparent tube, namely the rings of the edges, with materials of "Space Technology" (4), after special treatment of surfaces to resist in time duration the holding of high vacuum between the two on the same axis tubes (of bronze and of glass), that is the holding of vacuum up to 10 Pa (5). The third tube (6) is concentrically arranged within the two tubes (1, 3) creating a water ring immediately below the selective surface (2), for the substantial improvement of efficiency (35%) of the collector, due to subtripling of inertia factor. The total mass of water within the two inner tubes (1, 6) is sufficient to avoid the danger of steam making of water during an interruption of recirculating because of an electric power failure. Hygroscopic crystals may be added during the vacuum steps. The materials used are designed for operation temperatures from 60° C to 120° C, inside the bronze or of other metal tube of the solar collector. The high vacuum tube of three walls resists the pressure of water network and can thus operate also in an open circuit which reduces installation costs.
On the bottom (8) of metallic tube are welded two pipes 12.5 mm (or of other diameter). The water supplying pipe from the water network has a special construction at its inner end, so that the impetus of the entering network water is checked (9). Also the pipe of the exit of hot water is a pipe which extends internally along the metallic inner pipe, to get from its highest point the warmest layer of water, and simultaneously helping venting the pipe (10) during its filling (according to common knowledge). This pipe can be arranged at the highest point of the top closure member.
The upper end of the inner metallic pipe (1) either may end in a flange being open for connection to certain metallic boiler (water tank), horizontal or vertical at the pipe extension and in the same axis (it is possible to be welded directly on the boiler without flanges). And in this way a solar water heater or fast heater with mixing, with the modern technology of vacuum tube is formed. The inner metallic pipe may also be closed at the upper end with a blind bottom (8). The bottoms have formed properly (hemispherical shape) to reduce the forces from the pressure of the water network which is also the operation pressure of the systems, in which these pipes will be used. The vacuum tube may be insulated at its two free ends by pouring out of polyurethane (11) or with other insulating means arranged inside of appropriate and skillfully formed shells (plastic or from anodized aluminum, or from steel sheets and coating after the formation or also from stainless steel) (12). The triple tube is thereby insulated to reduce convection losses, at the ends with polyurethane and at the remaining length by the high vacuum (10 Pa).
The triple vacuum tube may be installed in the focus in front of an open semicylindrical paraboloid reflector (13) of a width corresponding to the diameter of the collecting surface of the black selectively coated inner tube (absorber). The reflector is composed from 2 to 3 parabolic curves.
This collector can operate also as an open circuit, because of the above previously mentioned particularities of the invention and it consist the "elementary unit" of the solar collector or the "module".

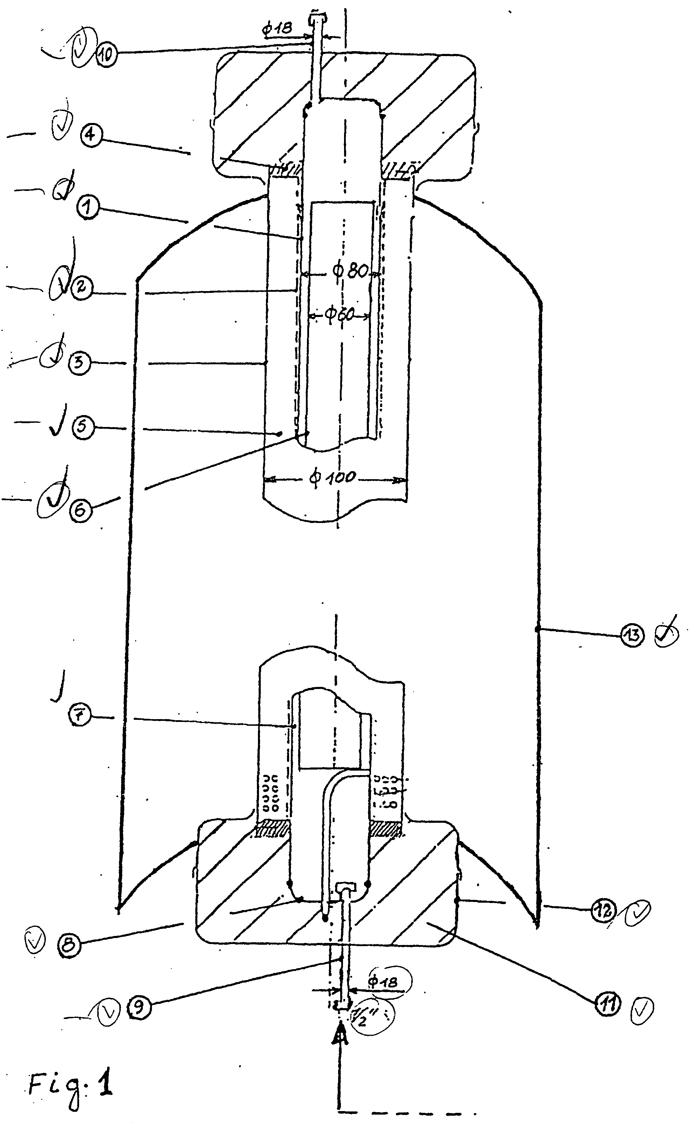

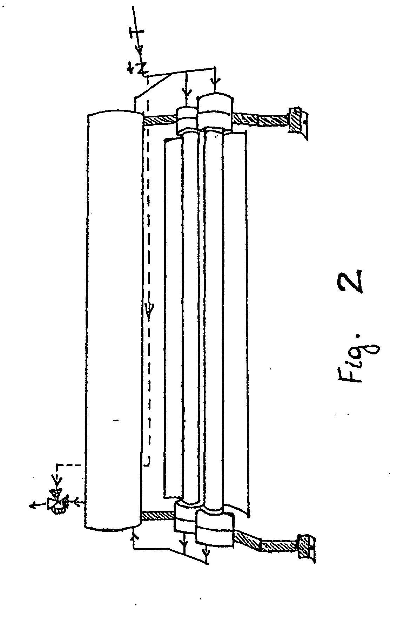

The invention eliminates the huge, non-esthetic bulks for storage of solar calories, by storing them in small water volumes, in upright or horizontal position and yet in high temperatures (boiling water 70° - 80° - 90° -100° C, overheated, water under pressure). These collectors at the same time lead to small collecting surfaces to collect the desired calories for domestic uses and storing them in small volumes of hot or overheated water and after mixing with cold water for use in houses or use of hot water where no central installation are present (i.e. Bungalows) (Fig. 2). The boiling water coming out of the "Solar - Fast heater" is mixed in a triode automatic thermostatic mixing valve, with the cold water of city network and the mixed hot water (temperature 40° - 50° C) to be used for domestic use. Comparing to conventional solar collectors the collector according to the invention is much smaller and approximately at 1/5 of the surface and volume and finally at smaller cost. And in combination with an electric resistance, as reserve solution when the sunshine is not sufficient, the solar collector according to the invention converts to an "Electric Fast heater", with the known saving in electric energy of these fast heaters in general.
An other subject of the present invention is the possibility to place in the row of such "module" of solar collectors of vacuum tube and of paraboloid reflector and to make up a collector of vacuum tubes and paraboloid reflectors but of open circuit (or also closed), with the above mentioned advantages, mainly in cost reduction of installations and the high efficiency. Comparing with the installations of flat collectors, the collector according to the invention has a triple to sixfold efficiency, according to the levels of temperature of hot water in the central installation system.

## Claims

1. Solar collector with a vacuum tube comprising a peripheral tube (3) transparent to solar radiation extending coaxially around a metal tube (1) provided with a selective coating (2) and a semicylindrical paraboloid reflector (13) peripherally arranged outside the transparent tube (3), the metal tube (1) extending axially over both ends of the transparent tube (3) is **characterized in that** the metal tube (1) having a relatively big diameter to present a sufficiently big capacity of liquid or water to be heated for avoiding steam generation due to interruption of circulation, the ends of said metal tube (1) being provided with concave ends (8) comprising a pipe (9,10) of small diameter welded in each of them forming the entry on the one side and the exit on the other side of the tube (1) for the liquid or water to be heated and allows the natural circulation of ascending hot water and makes possible the use of collector in applications of open circuit without the need of circulator to make the collector suitable to be connected to the pressure of city networks, the annular space between the transparent tube (3) and the metal tube (1) containing a high vacuum (5) of up to 10 Pa with space vacuum technology and perfect sealing of the ring opening (4) adjacent the ends of the transparent tube (3) and metal tube (1) to hold the vacuum for many years, the metal tube (1) containing another coaxial inner and shorter tube (6) open or closed at its ends of a smaller diameter than the metal tube of metal or plastic of sufficient temperature resistance, which is arranged a certain distance from each of the ends of the metal tube (1) and which separates the mass of liquid or water to a liquid ring of small thickness (7) immediately below the heated selective surface, reducing the coefficient of inertia of solar collector and improving substantially the efficiency in high temperatures.

2. Solar collector comprising a three wall vacuum tube as claim 1 further **characterized in that** said metal tube (1), which is fabricated, either from hot dip galvanized steel sheet, or from stainless steel sheet, or mainly from bronze, for greater conductivity and with very small phenomenon of electrolysis, and in case that there is no danger of electrolysis for the entire installation, it can be also from copper.

3. Solar collector comprising a three wall vacuum tube as claims 1 and 2 further **characterized in that** said black selective surface (2), which can be either from special selective coating of black color; or it can be made by dipping in special baths, in order to be covered with black oxide of nickel, or of chrome or titanium, or the tube will undergo cleaning and a special foil will be slicked, made of black nickel, black chrome or black titanium.

4. Solar collector comprising a three wall vacuum tube as claims 1 to 3 further **characterized in that** said outer transparent tube (3), which will be either from resistant glass, or from transparent clear acrylic, or also form other transparent material which shall fulfill the terms of endurance in weather aging, in breaking from hail, in operational temperatures and in the vacuum which will be created internally.

5. Solar collector comprising a three wall vacuum tube as claims 1 to 4 further **characterized in that** said sealing between the outer transparent (3) and the inner metallic tube (1) which will be done with appropriate materials and manner so that the holding of certain vacuum and up to the high vacuum 10 Pa to be secured in the duration of time and in the developed operation temperatures (5).

6. Solar collector comprising a three wall vacuum tube as claims 1 to 5 further **characterized by** positioning above the collector a boiler (tank) connected to the metal tube either through a flange or directly welded on the tube or appropriately connected through piping to the two ends of the tube, creating a "Solar Water Heater" with natural circulation of the ascending hot water in open circuit

7. Solar collector comprising a three wall vacuum tube as claims 1 to 5 further **characterized in that** said semicylindrical paraboloid reflector (13) of a section which is a double or triple paraboloid curve (composite curve) and can be made from whichever material can have great degree of reflection from 60% up to 94% (included). (and in the future more above, if suitable materials are found), as aluminum plasticized mirror, or aluminum mirror which has been stick , from special strength plastic membrane mirror of "3M" Company, or polycarbonate plastic sheer (0.75-1 mm), in which aluminum evaporation and special protection of its surface has been made, or plastic mirror flexible and resistant in the time and the weather conditions and of whichever construction, for the formation and preservation of its paraboloid semicylindrical shape and a framework made from metal or plastic giving the shape and support for resistance against wind gusts etc.

8. Solar collector comprising a three wall vacuum tube as claim 1 to 5 and 7 further **characterized by** collectors connected in series creating the "Solar Collector for Central Installations" in open circuit (or close circuit, i.e. in case of air conditioning with solar energy), without the danger of the salts to block the piping and of the frosts to brake the collectors in winter due to high vacuum in the tubes and the insulation at other parts of collectors.

9. Solar collector comprising a three wall vacuum tube as claim 6 **characterized by** the incorporation of a relatively small boiler (tank of corresponding liters) at the upper end of the collectors creating a "Solar and Electric Water Fast-heater with Automatic Thermostatic Mixing" (mixing immediately at the exit of the boiler), for domestic use, operating in open circuit without the need of circulator and the possibility to connect the boiler to 2-3 vacuum tubes with high efficiencies, low cost and occupation of very small space in comparison with the flat solar water heaters.

## Patentansprüche

1. Sonnenkollektor mit Vakuumrohr bestehend aus
einem äußeren Rohr (3), durchsichtig zur Sonnenstrahlung, koaxial erstreckend rund um einem metallischen Rohr (1) mit ausgewählter Abdeckung (2) und einen halbzylindrischen parabolischen Reflektor (13) angeordnet ringsherum außerhalb des transparenten Rohrs (3), dem metallischen Rohr (1), koaxial erstreckend über die beiden Enden des transparenten Rohrs (3), **gekennzeichnet** indem, dass das metallische Rohr einen verhältnismäßig großen Durchmesser hat womit eine genügend hohe Flüssigkeit- oder Wasserkapazität vorhanden ist um die Durchflussunterbrechung wegen Kreislaufunterbrechung zu meiden, die Enden des metallischen Rohrs (1), mit konkaven Form (8), die ein Rohr (9,10) mit kleinem Durchmesser enthalten, das geschweißt an den beiden Enden ist, und die Vor- und Rücklaufanschlüsse des Rohrs (1) für die zu erwärmende Flüssigkeit oder Wasser bildet und den natürlichen Durchfluss für das steigende Warmwasser erlaubt, was den Einsatz des Kollektors bei Anwendungen mit offenen Kreislauf ohne die Erfordernis eines Zirkulators ermöglicht, womit der Kollektor geeignet für die Anbindung an Stadtnetzen wird, dem ringförmigen Raum zwischen dem transparenten Rohr (3) und dem metallischen Rohr (1) das Vakuum (5) bis zu 10Pa beinhaltet, mit Vakuumstechnologie und perfekte Dichtung der zu den Enden des transparenten Rohrs (3) und des metallischen Rohrs (1) anliegende Ringöffnung (4) um das Vakuum über mehrere Jahre aufrechtzuerhalten, dem metallischen Rohr, das ein weiteres kürzeres, koaxiales Rohr (6) beinhaltet, offen oder geschlossen an seinen Enden, mit kleinerem Durchmesser als das metallische Rohr, aus Metal oder Kunststoff mit ausreichende Temperaturfestigkeit, das in einem gewiesen Abstand von beiden Enden des metallischen Rohrs (1) angeordnet ist, welches die Masse der Flüssigkeit oder des Wassers in einen flüssige dünnen Ring (7) direkt unter der erwärmende Oberfläche trennt, womit der Trägheitsfactor des Sonnenkollektors vermindert und der Wirkungsgrad bei hohen Temperaturen wesentlich verbessert wird.

2. Sonnenkollektor bestehend aus einem dreiwandigen Vakuumsrohr, wie unter 1 beschrieben wird, der zusätzlich **gekennzeichnet** ist, dass das oben genannte metallische Rohr (1) entweder aus feuerverzinktem Stahl ebenso aus Edelstahl gefertigt ist, oder aus Bronze, für höhere Leitfähigkeit und geringere Elektrolyse Phaenomenon, oder auch aus Kupfer, wenn keine Elektrolysegefahr für die gesamte Anlage besteht.

3. Sonnenkollektor bestehend aus einem dreiwandigen Vakuumsrohr, wie unter 1 und 2 beschrieben wird, der zusätzlich **gekennzeichnet** ist, dass die oben genannte schwarze ausgewählte Oberfläche (2) entweder mit einer spezielle, schwarze Farbe abgedeckt wird, oder durch das Eintauchen in Spezialbäder mit schwarzem Nickel Oxid, oder Chrom oder Titan abgedeckt wird, oder das Rohr wird gereinigt und mit einer Sonderfolie aus schwarzem Nickel, schwarzem Chrom oder schwarzem Titan überdeckt.

4. Sonnenkollektor bestehend aus einem dreiwandigen Vakuumsrohr, wie unter 1 bis 3 beschrieben wird, der zusätzlich **gekennzeichnet** ist, dass das oben genannte äußeres transparentes Rohr (3) entweder aus beständigem Glass oder transparentem Akryl, oder anderem transparentem Material hergestellt ist, so dass es grosse Widerstand gegen Wetter, Hagelschlag, Betriebstemperatur und dem Vakuum, das im innerem entsteht, vorweisen kann.

5. Sonnenkollektor bestehend aus einem dreiwandigen Vakuumsrohr, wie unter 1 bis 4 beschrieben wird, der zusätzlich **gekennzeichnet** ist, dass die oben genannte Dichtung zwischen dem äußeren transparentem Rohr (3) und dem inneren metallischen Rohr (1), aus einem Material und in einer Bauweise hergestellt sein wird, dass sie für ein hohes Vakuum von 10Pa und über die Zeit und die auftretende Betriebstemperaturen gesichert ist.

6. Sonnenkollektor bestehend aus einem dreiwandigen Vakuumsrohr, wie unter 1 bis 5 beschrieben wird, der zusätzlich **gekennzeichnet** ist von einem Boiler der über den Kollektor angebracht ist, der an dem metallischen Rohr verbunden ist, mittels eines Flansches oder direkt am Rohr angeschweißt ist, oder sachgemäß mittels Rohrleitungen an den beiden Enden des Rohres verbunden ist, womit er einen "Solarwasserwärmer" mit natürlichen Durchfluss von dem steigenden Warmwasser im offenen Kreislauf bildet.

7. Sonnenkollektor bestehend aus einem dreiwandigen Vakuumsrohr, wie unter 1 bis 5 beschrieben wird, der zusätzlich **gekennzeichnet** ist von einer halbzylindrischen parabolischen Reflektor (13) von einem Querschnitt der eine doppelte oder dreifache parabolische Kurve ist (Verbundkurve) und aus einem Material hergestellt ist, das einem hohen Reflexionsgrand 60% bis 94% (inklusiv) besitzt (und noch höher in der Zukunft, falls entsprechende Materialien erhältlich werden), wie z.B. Aluminium-Weichspiegel oder Aluminium-Spiegel der befestig ist, mit besonders festem Membran aus Kunststoff der Firma "3M", oder Schicht aus Polycarbonat (0,75-1mm), bei welcher Aluminium Verdampfung und Sonderschutz der Oberfläche statt gefunden hat, oder flexiblen Kunststoff-Spiegel der Zeit- und Wetterbeständig ist, von einer Bauart die die parabolische halbzylindrische Form hält und ein Gerüst aus Metal und Kunststoff dass die Form und die Festigkeit vor Windlasten usw. standhält.

8. Sonnenkollektor bestehend aus einem dreiwandigen Vakuumsrohr, wie unter 1 bis 5 und 7 beschrieben wird, der zusätzlich **gekennzeichnet** ist von einer Reihe verbundenen Kollektoren die einen "Sonnenkollektor für Zentralanlagen" bilden, im offenem Kreislauf (oder geschlossenen Kreislauf, z.B. im Falle einer Klimaanlage mit Sonnenenergie), wobei keine Gefahr besteht, dass die Rohre von Salz verstopfen und dass die Kollektoren im Winter durch den Frost zerstört werden wegen des hohen Rohrvakuums und der Isolierung in anderen Teilen der Kollektoren.

9. Sonnenkollektor bestehend aus einem dreiwandigen Vakuumsrohr, wie unter 6 beschrieben wird, der zusätzlich **gekennzeichnet** ist von einem relativ kleinen Boiler am oberen Ende der Kollektoren, der einen "Solar- und Elektro-Schnellwasserwärmer mit automatischen thermostatischen Mischung" (Mischung direkt am Austritt des Boilers) bildet, für inländischen Gebrauch, betrieben im offenen Kreislauf, ohne dass es ein Zirkulator erforderlich ist, und die Möglichkeit den Boiler mit 2-3 Vakuumrohren zu verbinden, mit hoher Effizienz, preiswert und Raum sparend, im Vergleich zu flachen Solarwasserwärmer.

## Revendications

1. Capteur solaire constitué d'un tube à vide comprenant un tube périphérique (3) laissant passer le rayonnement solaire qui s'étend de façon coaxiale autour d'un tube en métal (1) fourni avec un revêtement sélectif (2) et un réflecteur semi-cylindrique paraboloïde (13) fixé tout autour, à l'extérieur du tube transparent (3), le tube en métal (1) qui s'étend de façon axiale jusqu'aux deux extrémités du tube transparent (3) est **caractérisé par** un diamètre relativement grand dans le but d'offrir une capacité de liquide ou d'eau pouvant être chauffée suffisamment grande afin en évitant la formation de vapeur d'eau du fait de l'interruption de la circulation, le tube en métal (1) susmentionné étant fourni avec des extrémités concaves (8) comprenant un tuyau (9,10) d'un petit diamètre soudé à chacune des extrémités formant d'un côté du tube (1), l'entrée, et de l'autre, la sortie, pour que le liquide ou l'eau soit chauffé, et permettant la circulation naturelle de l'eau chaude ascendante et rendant possible l'utilisation du capteur dans des applications de circuit ouvert sans le besoin d'un circulateur pour que le capteur puisse être relié à la pression des réseaux urbains, l'espace annulaire entre le tube transparent (3) et le tube en métal (1) contenant un vide poussé (5) allant jusqu'à 10 Pa allié à une technologie de l'espace vide et à une parfaite obturation de l'anneau d'ouverture (4) adjacent aux extrémités du tube transparent (3) et du tube en métal (1) afin que le vide soit contenu de nombreuses années, le tube en métal (1) contenant un autre tube coaxial interne et plus court (6) ouvert ou fermé à ses extrémités, d'un diamètre plus petit que le tube en métal, en métal ou en plastique, résistant à de hautes températures, fixé à une certaine distance de chacune des extrémités du tube en métal (1) et séparant la masse de liquide ou d'eau d'un anneau liquide de petite épaisseur (7) juste en dessous de la surface sélective chauffée, réduisant le coefficient d'inertie du capteur solaire et améliorant de façon substantielle l'efficacité à de hautes températures.

2. Capteur solaire comprenant un tube à vide avec trois parois, conformément à la revendication 1, **caractérisé en outre par** ledit tube en métal (1) fabriqué en tôle d'acier galvanisée par immersion à chaud, en tôle d'acier inoxydable, ou en grande partie en bronze, pour une plus grande conductivité et un phénomène d'électrolyse peu important, et au cas où il n'y aurait pas de danger d'électrolyse pour l'installation toute entière, il peut aussi être en cuivre.

3. Capteur solaire comprenant un tube à vide avec trois parois, conformément aux revendications 1 et 2, en outre **caractérisé par** ladite surface sélective noire (2), qui peut être un revêtement sélectif spécial de couleur noire ou qui peut-être obtenue par immersion dans des bains spéciaux afin qu'elle soit recouverte d'un oxyde noir de nickel, de chrome ou de titane, ou bien le tube sera nettoyé et une feuille de métal spéciale - en nickel noir, en chrome noir ou en titane noir - sera lissée.

4. Capteur solaire comprenant un tube à vide avec trois parois, conformément aux revendications 1 à 3, en outre **caractérisé par** un tube transparent externe (3) qui sera en verre résistant, en acrylique transparent ou en tout autre matériaux transparent qui répondra aux exigences de résistance au passage du temps, à la violence de la grêle, aux températures générées par l'opération et au vide qui sera crée à l'intérieur.

5. Capteur solaire comprenant un tube à vide avec trois parois, conformément aux revendications 1 à 4, en outre **caractérisé par** l'obturation entre le tube transparent externe (3) et le tube métallique interne (1) qui sera fabriquée avec les matériaux adéquats et de telle sorte qu'un certain vide allant jusqu'au vide poussé de 10 Pa puisse être contenu de façon sécurisée sur la durée et dans les températures développées lors de l'opération (5).

6. Capteur solaire comprenant un tube à vide avec trois parois, conformément aux revendications 1 à 5, en outre **caractérisé par** le positionnement au-dessus du capteur d'un chauffe-eau (cuve) relié au tube en métal soit par une bride ou directement soudé au tube ou relié de façon appropriée aux deux extrémités du tube à l'aide d'un tuyau, créant un « chauffe-eau solaire » avec une circulation naturelle de l'eau chaude ascendante dans un circuit ouvert.

7. Capteur solaire comprenant un tube à vide avec trois parois, conformément aux revendications 1 à 5, en outre **caractérisé par** ledit réflecteur semi-cylindrique paraboloïde (13) d'une section qui est une courbe paraboloïde double ou triple (courbe composite) et qui peut être fabriqué à partir de n'importe quel matériaux pouvant avoir un haut degré de réverbération, de 60 % à 94 % (inclus) (et dans le futur un peu plus si les matériaux adéquats sont trouvés), tel que le miroir plastifié d'aluminium, ou un miroir en aluminium qui a été collé, obtenu à partir d'un miroir en membrane de plastique solide spécial de la société « 3M » ou du plastique polycarbonate fin (0,75-1mm), sur lequel on a procédé à une évaporation de l'aluminium et à une protection spéciale de sa surface, ou de miroir plastique flexible et résistant au temps et aux conditions météorologiques quelle que soit la construction, pour la formation et la conservation de sa forme semi-cylindrique paraboloïde et d'une structure en métal ou en plastique donnant la forme et le support pour résister aux rafales de vent etc...

8. Capteur solaire comprenant un tube à vide avec trois parois, conformément aux revendications 1 à 5 et 7, en outre **caractérisé par** des capteurs reliés en série créant le « capteur solaire pour des installations centrales » en circuit ouvert (ou circuit fermé, par exemple, en cas d'air conditionné à l'énergie solaire), sans le danger des sels bouchant les tuyaux ou du gel brisant les capteurs en hiver du fait du vide poussé dans les tubes et de l'isolation en d'autres parties des capteurs.

9. Capteur solaire comprenant un tube à vide avec trois parois, conformément à la revendication 6, **caractérisé par** l'incorporation d'un chauffe-eau relativement petit (cuve d'une capacité correspondante) à l'extrémité supérieure des capteurs créant un « chauffe-eau rapide solaire et électrique avec un mélange thermostatique automatique » (mélange juste à la sortie du chauffe-eau), pour un usage domestique, fonctionnant en circuit ouvert sans le besoin d'un circulateur et avec la possibilité de relier le chauffe-eau aux tubes à vide 2 et 3 pour un résultat très efficace, d'un coût réduit et occupant peu de place comparé aux chauffe-eau solaires plats.
